# EUROPÄISCHE PATENTSCHRIFT

(11) **EP 1 635 082 B1**
(45) Veröffentlichungstag und Bekanntmachung des Hinweises auf die Patenterteilung: **10.10.2007**
(21) Anmeldenummer: 05019380.4
(22) Anmeldetag: 06.09.2005
(51) Int. Cl.: F16D 67/04, F16D 55/00, F16D 65/14

(54) **Kupplungs-Brems-Kombination**
Clutch-brake combination
Combinaison embrayage-frein

(30) Priorität: 09.09.2004 DE 102004044008
(43) Veröffentlichungstag der Anmeldung: 15.03.2006
(73) Patentinhaber: Herion Systemtechnik GmbH, 71263 Weil der Stadt-Merklingen (DE)
(72) Erfinder: Grötzinger, Lothar, 72172 Sulz / Neckar (DE)
(74) Vertreter: Jakelski, Joachim

(56) Entgegenhaltungen:
- EP-A- 0 480 169
- DE-A1- 4 407 943
- DE-A1- 10 256 023
- DE-C1- 10 021 130
- US-A- 3 805 931

## Beschreibung

Die Erfindung betrifft eine Kupplungs-Brems-Kombination nach dem Oberbegriff des Anspruchs 1.

Derartige Kupplungs-Brems-Kombinationen kommen beispielsweise bei Pressen zum Einsatz. Bei der Umsteuerung des Hauptkolbens zwischen der Bremslage einerseits und der Kupplungslage andererseits oder umgekehrt beendet der Kolben seine Andruckwirkung an der einen Scheibe oder an einem Lamellenpaket, bevor er einen Andruck auf die gegenüberliegende Scheibe bzw. das gegenüberliegende Lamellenpaket ausübt. Durch diese zeitliche Differenz, die nachfolgend kurz als "Unterschneidung" bezeichnet wird, können sich auf den Antrieb der Kombination einwirkende Lastmomente störend auswirken. Während der Unterschneidung üben die Lastmomente eine Zwangsbewegung auf den Antrieb aus. Eine solche unerwünschte Bewegung kann Störungen oder Beschädigungen der mit der Kombination versehenen Vorrichtung hervorrufen.

Aus der DE 100 21 130 C1 ist eine gattungsgemäße Kupplungs-Brems-Kombintion bekannt, bei der zur Vermeidung derartiger Unterschneidungen ein Hilfskolben in dem Hauptkolben angeordnet ist. Der Hilfskolben ist aufgrund einer Hilfsfederkraft in Richtung der Bremsscheibe vom Hauptkolben frei wegbewegbar. Bei Erreichen eines bestimmten Anfangs-Mediendrucks beginnt zwar der Hauptkolben in Richtung der Kupplungsscheibe zu bewegen, der Hilfskolben wird jedoch von seiner Hilfsfederkraft noch so lange gegen die Bremsscheibe gedrückt gehalten, bis bei einem höheren Mediendruck der Hauptkolben einen kupplungswirksamen Andruck auf die Kupplungsscheibe ausübt. Bei weiter wachsendem Mediendruck entfernt sich der Hilfskolben gegen dessen Hilfsfederkraft von der Bremsscheibe und bewegt sich auf den Hauptkolben zu.

Aus der DE 44 07 943 A1 geht eine Kupplungs-Brems-Kombination hervor, bei der zur Vermeidung von Unterschneidungen ein Hilfskolben in dem Hauptkolben vorgesehen ist. Im Kupplungsmoment findet eine erste Annäherung des Hilfskolbens an die Kupplungsscheiben statt, ohne daß dieser mit den Kupplungsscheiben in Kontakt kommt. Nach dem Lösen der Bremse, nähert sich der Hilfskolben in einer ersten Kupplungsphase an den Hauptkolben an, bis in einer zweiten Phase, nach dem Kontakt zwischen beiden Kolben, die ganze Anordnung in herkömmlicher Weise wie mit einem einzigen Kolben wirkt.

Aus der EP 0 480 169 A1 ist eine Kupplungs- und Bremsvorrichtung, insbesondere für Pressen der gattungsgemäßen Art bekannt geworden, bei der zur Realisierung einer konstruktiv einfachen, funktionssicheren und wirkungsvolleren Ankopplung des Schleichgangantriebs an die Welle ein Hilfskolben über eine Stoßverbindung am Schaltkolben angreift, wobei der Hilfskolben unabhängig von der Druckmittelbaufschlagung des Schaltkolbens in Wirkrichtung von Rückstellfedern seinerseits druckmittelbaufschlagt ist. Auch bei dieser Kupplungs- und Bremsvorrichtung wirkt der Hilfskolben auf den Hauptkolben.

Nachteilig bei diesen Kupplungs-Brems-Kombinationen ist es nun, daß der Hilfskolben mit dem Hauptkolben gekoppelt ist, namentlich als Teil des Hauptkolbens ausgebildet ist. Dies ist zum einen deshalb nachteilig, weil der Weg, den der Hilfskolben ausführt, nicht unabhängig vom Hauptkolben ist. Auch ist die Druckbeaufschlagung des Hilfskolbens mit der Druckbeaufschlagung des Hauptkolbens gekoppelt. Zum anderen ist es problematisch, daß der Hilfskolben beispielsweise bei einem Defekt nicht separat vom Hauptkolben montierbar/demontierbar ist.

Aufgabe der Erfindung ist es daher, eine Kupplungs-Brems-Kombination der eingangs genannten Art dahingehend weiterzubilden, daß die vorstehenden Nachteile beseitigt werden und insbesondere eine vom Hauptkolben unabhängige Ansteuerung des Hilfskolbens ermöglicht wird. Auch sollen an der Kupplungs-Brems-Kombination auf leichte Weise Wartungsarbeiten durchgeführt werden können, insbesondere soll ein Austausch des Hilfskolbens leicht möglich sein.

Die Aufgabe wird erfindungsgemäß gelöst durch die Merkmale des Anspruchs 1.

Durch die Anordnung des Hilfskolbens auf der dem Hauptkolben abgewandten Seite der Kupplung ist nicht nur eine leichte Zugänglichkeit des Hilfskolbens, beispielsweise im Falle der Wartung oder wenn der Hilfskolben z.B. wegen eines Defekts ausgetauscht werden muß, möglich. Besonders vorteilhaft ist es, daß durch die getrennte Anordnung des Hilfskolbens vom Hauptkolben weitreichende Steuerungen möglich sind, da der Hilfskolben nicht mehr an den Hauptkolben gekoppelt ist und daher vom Hauptkolben völlig unabhängige Hubbewegungen ausführen kann. Allein durch die Einstellung des Hubs des Hilfskolbens können auf nachstehend noch näher erläuterte Weise unterschiedliche Betriebszustände der Kupplungs-Bremskombination realisiert werden.

Bevorzugt ist der Hilfskolben separat, also unabhängig vom Hauptkolben ansteuerbar. Rein prinzipiell kann diese separate Ansteuerung auf die unterschiedlichste Art und Weise erfolgen.

In jedem Falle wird der Hilfskolben durch einen separaten Medienkanal mit dem unter Druck stehenden Medium beaufschlagt. Dieser separate Medienkanal kann bei einer Ausführungsform an einen separaten Ausgang geführt sein, bei einer wiederum anderen Ausführungsform mündet der separate Medienkanal in den Medienkanal des Hauptkolbens.

Der Hub des wenigstens einen Hilfskolbens kann rein prinzipiell auf die unterschiedlichste Art und Weise eingestellt werden. So können beispielsweise Distanzscheiben vorgesehen sein, die den Hub begrenzen. Darüber hinaus kann der Hub durch Anschläge oder dergleichen begrenzt werden.

Dabei kann eine der folgenden Kombinationen der Einstellungen des wenigstens einen Hilfskolbens und des Hauptkolbens durch Variation des Hubs des wenigstens einen Hilfskolbens realisiert werden:
a) Der Hub des Hilfskolbens ist so groß, daß der Hilfskolben noch nicht an der Kupplungsscheibe oder einem Kupplungslamellenpaket anliegt, während sich der Hauptkolben bereits von der Bremsscheibe oder einem Bremslamellenpaket löst. Dieser Betriebszustand beschreibt eine einstellbare gewünschte Unterschneidung.
b) Der Hub des Hilfskolbens ist so groß, daß er gerade an der Kupplungsscheibe/dem Kupplungslamellenpaket anliegt, wenn der Hauptkolben sich von der Bremsscheibe/dem Bremslamellenpaket löst. Hierdurch wird ein Betriebszustand erreicht, bei dem die Unterschneidungszeit auf Null reduziert ist.
c) Der Hub des Hilfskolbens ist so groß, daß er bereits an der Kupplungsscheibe/dem Kupplungslamellenpaket anliegt, wenn sich der Hauptkolben von der Bremsscheibe/dem Bremslamellenpaket löst. Dieser Betriebszustand realisiert eine gewünschte Überschneidung.

Hervorzuheben ist, daß der Hub des wenigstens einen Hilfskolbens unabhängig vom Hauptkolben eingestellt werden kann. Gerade hierdurch sind die obenbeschriebenen weitreichenden Kombinationen möglich, die bei aus dem Stand der Technik bekannten Kupplungs-Brems-Kombinationen, bei denen der Hilfskolben an den Hauptkolben gewissermaßen gekoppelt ist, nicht realisierbar sind.

Weitere Vorteile und Merkmale sind Gegenstand der nachfolgenden Beschreibung sowie der zeichnerischen Darstellung von Ausführungsbeispielen. In der Zeichnung zeigen:
- Fig. 1: ein erstes Ausführungsbeispiel einer von der Erfindung Gebrauch machenden Kupplungs-Brems-Kombination;
- Fig. 2: ein zweites Ausführungsbeispiel einer von der Erfindung Gebrauch machenden Kupplungs-Brems-Kombination und
- Fig. 3: eine Vorderansicht der in Fig. 1 dargestellten Kupplungs-Brems-Kombination.

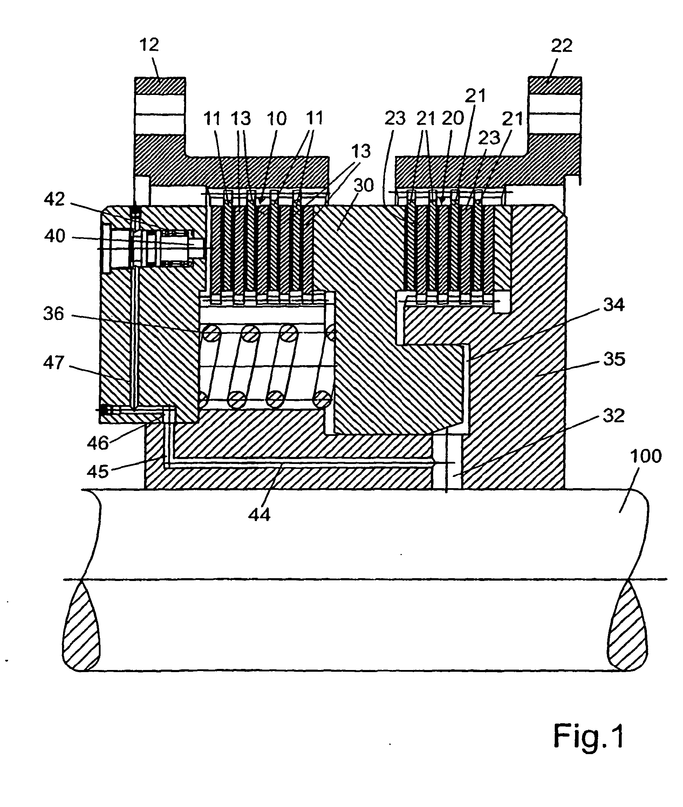

Eine in Fig. 1 dargestellte Kupplungs-Brems-Kombination weist ein Kupplungslamellenpaket 10 sowie ein Bremslamellenpaket 20 auf. Das Kupplungslamellenpaket 10 umfaßt äußere Kupplungslamellen 11, die mit einem äußeren Mitnehmer 12, der beispielsweise an einem Schwungrad (nicht dargestellt) angeordnet ist, verbunden sind und innere Lamellen 13, die drehfest mit einem Innenmitnehmer 35 verbunden sind, der, ebenfalls in drehfester Verbindung, die zu dem Bremslamellenpaket 20 gehörenden inneren Bremslamellen 23 trägt. Die äußeren Bremslamellen 21 sind mit einem ortsfesten Träger 22 verbunden, der beispielsweise an dem Pressengehäuse befestigt ist. Zwischen dem Kupplungslamellenpaket 10 und dem Bremslamellenpaket 20 ist ein Hauptkolben 30 angeordnet, der durch einen Hauptdruckkanal 32, der in einen Hauptdruckkolbenraum 34 mündet, mit Druck beaufschlagbar ist. Der Hauptkolben 30 ist durch wenigstens eine Feder 36 vorgespannt derart, daß der Hauptkolben 30 in seiner Ausgangslage eine Kraft auf das Bremslamellenpaket 20 ausübt.

Auf der dem Hauptkolben 30 abgewandten Seite des Kupplungslamellenpakets 10 ist ein Hilfskolben 40 vorgesehen, der durch die Hilfsfederkraft einer Hilfsfeder 42 in einer das Kupplungslamellenpaket 10 nicht vorspannenden Position angeordnet ist. Der Hilfskolben 40 wird durch einen separaten Hilfsdruckkanal 44, 45, 46, 47 mit Druck beaufschlagt. Der Hilfsdruckkanal 44, 45, 46, 47 mündet, in den Hauptdruckkanal 32.

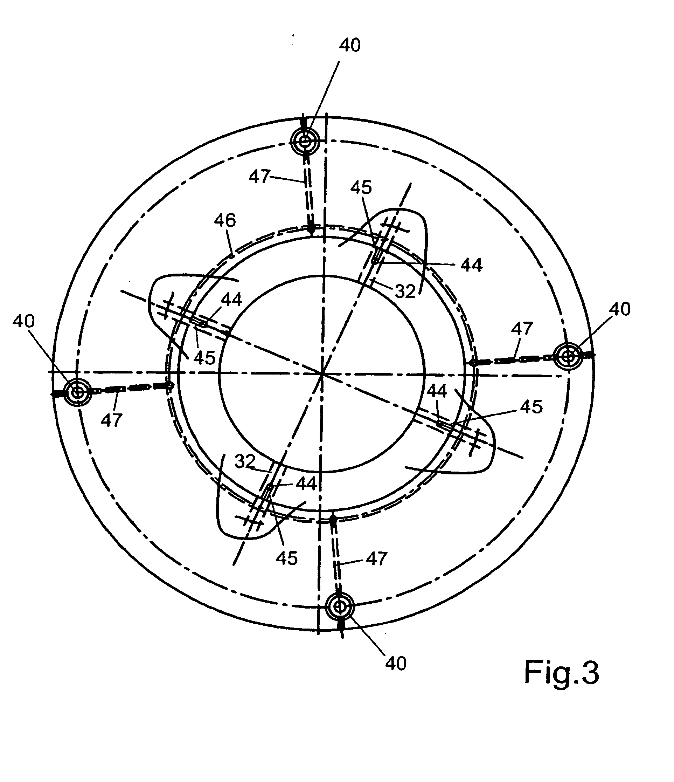

Wie in Fig. 3 schematisch dargestellt, sind um eine zentrale Welle 100 beispielsweise vier derartiger Hilfskolben 40 im wesentlichen jeweils um gleiche Winkel versetzt angeordnet. Es versteht sich, daß die Erfindung nicht auf die Anordnung von vier Kupplungs-Brems-Kombinationen beschränkt ist. Möglich ist es auch, weniger als vier oder mehr als vier derartiger Kupplungs-Brems-Kombinationen vorzusehen.

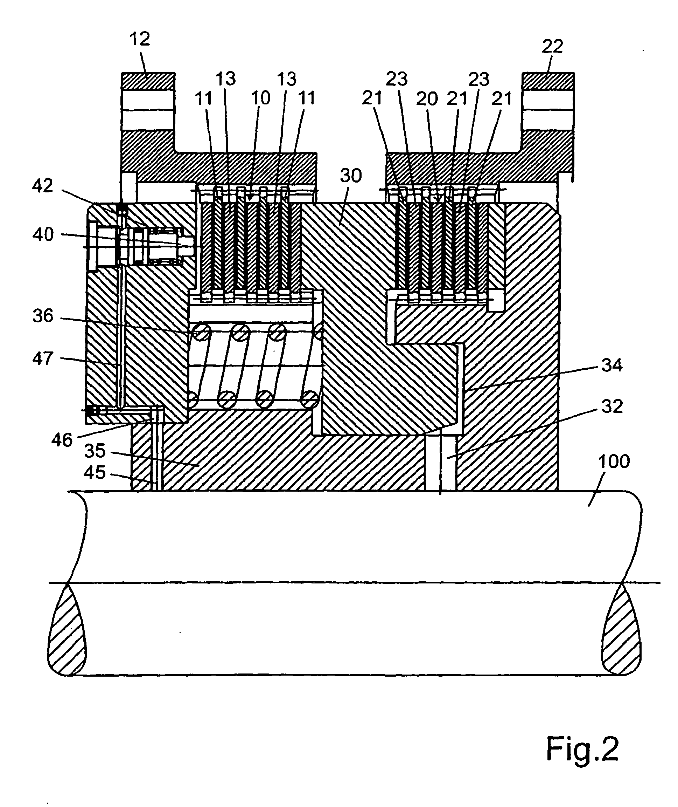

Bei einem weiteren Ausführungsbeispiel einer Kupplungs-Brems-Kombination, dargestellt in Fig. 2, sind gleiche Elemente mit den gleichen Bezugszeichen wie in Fig. 1 bezeichnet, so daß bezüglich deren Erläuterung auf das Vorstehende vollinhaltlich Bezug genommen wird. Die in Fig. 2 dargestellte Kupplungs-Brems-Kombination unterscheidet sich von der in Fig. 1 dargestellten nur dadurch, daß der Hilfsdruckkanal 45, 46, 47 an einen separaten Ausgang geführt ist, also nicht in den Hauptdruckkanal 32 mündet. Hierdurch ist eine von der Druckbeaufschlagung des Hauptkolbens 30 separate Druckbeaufschlagung des Hilfskolbens 40 möglich.

Die Funktionsweise der Kupplungs-Brems-Kombination ist nun folgende.

Es können im wesentlichen drei unterschiedliche Betriebszustände unterschieden werden, die allein durch Wahl des Hubs des Hilfskolbens 40 realisierbar sind.

Bei einem ersten Betriebszustand ist der Hub des Hilfskolbens 40 so groß, daß der Hilfskolben 40 noch nicht an dem Kupplungslamellenpaket 10 anliegt, während sich der Hauptkolben 30 bereits von dem Bremslamellenpaket 20 löst. Dieser Betriebszustand beschreibt eine gewünschte und vorgebbare Unterschneidung. Die Einstellung des Hubs des Hilfskolbens 40 kann dabei beispielsweise durch Distanzringe (nicht dargestellt) oder durch Anschläge und dergleichen, die sicherstellen, daß der Hub des Hilfskolbens 40 nur einen gewünschten Wert einnimmt, erfolgen.

In einem weiteren Betriebszustand, bei dem diese Unterschneidung auf Null reduziert wird, wird der Hub des Hilfskolbens 40 so groß gewählt, daß er gerade noch an dem Kupplungslamellenpaket 10 anliegt, wenn sich der Hauptkolben 30 von dem Bremslamellenpaket 20 löst.

In einem dritten Betriebszustand wird eine gewünschte Überschneidung dadurch realisiert, daß zunächst der Hauptkolben 30 aufgrund der Vorspannkraft der Hauptfedern 36 an dem Bremslamellenpaket 20 anliegt und so die Bremse betätigt. Noch während das Bremslamellenpaket 20 auf diese Weise mit einer Kraft beaufschlagt ist, werden die Hilfskolben 40 durch den Hilfsdruckkanal 44 mit einem ersten Mediendruck beaufschlagt, der eine Kraft auf den Hilfskolben 40 ausübt, die größer ist als die Hilfsfederkraft der Hilfsfeder 42. Auf diese Weise fährt der Hilfskolben hin zu dem Kupplungslamellenpaket und übt auf dieses einen Druck aus. Bei weiterem Anstieg des Mediendrucks wird nun der Kolbenraum 34 des Hauptkolbens 30 mit einem Druck beaufschlagt, der eine Kraft auf den Hauptkolben 30 ausübt, die größer ist als die Federkraft der Hauptfeder 36, so daß sich der Hauptkolben 30 auf das Kupplungslamellenpaket 10 zubewegt und auf der dem Hilfskolben 40 abgewandten Seite auf das Kupplungslamellenpaket 10 drückt.

Nach Abschalten der Kupplung wird der Druck aus dem Kolbenraum 34 des Hauptkolbens entfernt, so daß die Hauptfeder 36 den Hauptkolben 30 wieder zurück in Richtung des Bremslamellenpakets 20 bewegt. Der Druck wird dabei jedoch nur so abgesenkt, daß am Hilfskolben 40 noch eine Kraft ausgeübt wird, die größer ist als die Hilfsfederkraft, so daß die Kupplung weiterhin betätigt ist. Erst bei weiterem Absinken des Drucks überwiegt die Hilfsfederkraft, so daß der Hilfskolben 40 in seine in der Figur dargestellte Ausgangsposition zurückkehrt und die Kupplung geöffnet ist.

## Patentansprüche

1. Kupplungs-Bremskombination mit wenigstens einer ortsfesten Bremsscheibe, mit mindestens einer drehbeweglich mit dem Antrieb verbundenen Kupplungsscheibe (10), mit einem dazwischen angeordneten Hauptkolben (30), wobei der Hauptkolben (30) durch eine Hauptfederbelastung (36) in eine Andrucklage an die Bremsscheibe (20) vorgespannt ist und durch Drucksteuerung in eine Andrucklage an die Kupplungsscheibe (10) bewegbar ist, und mit wenigstens einem relativ zum Hauptkolben (30) bewegbaren Hilfskolben (40), der seinerseits durch eine Hilfsfederkraft (42) belastet ist, **dadurch gekennzeichnet, daß** der wenigstens eine Hilfskolben (40) auf der dem Hauptkolben (30) abgewandten Seite der Kupplung angeordnet ist und ohne Mediendruck durch die Hilfsfederkraft (42) in einer die Kupplung nicht vorspannenden Position angeordnet ist und durch Mediendruck in eine Andrucklage an die Kupplungsscheibe (10) bewegbar ist.

2. Kombination nach Anspruch 1, **dadurch gekennzeichnet, daß** der wenigstens eine Hilfskolben (40) unabhängig vom Hauptkolben (30) separat ansteuerbar ist.

3. Kombination nach Anspruch 1 oder 2, **dadurch gekennzeichnet, daß** der wenigstens eine Hilfskolben (40) eine separate Medienleitung (45, 46, 47) aufweist.

4. Kombination nach Anspruch 3, **dadurch gekennzeichnet, daß** die Medienleitung (45, 46, 47) des Hilfskolbens (40) an einen separaten Ausgang geführt ist.

5. Kombination nach Anspruch 3, **dadurch gekennzeichnet, daß** die Medienleitung (44, 45, 46, 47) des Hilfskolbens (40) in eine Medienleitung (32) des Hauptkolbens (30) mündet.

6. Kombination nach einem der vorstehenden Ansprüche, **dadurch gekennzeichnet, daß** der Hub des wenigstens einen Hilfskolbens (40) einstellbar ist.

7. Kombination nach Anspruch 6, **gekennzeichnet durch** eine der folgenden Kombinationen:
a) der Hub des Hilfskolbens (40) ist so groß, daß er noch nicht an der Kupplungsscheibe (10) anliegt, während sich der Hauptkolben (30) bereits von der Bremsscheibe (20) löst;
b) der Hub des Hilfskolbens (40) ist so groß, daß er gerade dann an der Kupplungsscheibe (10) anliegt, wenn sich der Hauptkolben (40) von der Bremsscheibe (20) löst;
c) der Hub des Hilfskolben (40) ist so groß, daß er bereits an der Kupplungsscheibe (10) anliegt, wenn sich der Hauptkolben (30) von der Kupplungsscheibe (10) löst.

8. Kombination nach einem der vorstehenden Ansprüche, **dadurch gekennzeichnet, daß** eine Mehrzahl von Hilfskolben (40) um gleiche Winkel versetzt vor der Kupplungsscheibe (10) angeordnet sind.

## Claims

1. Clutch-brake combination having at least one stationary brake disk, at least one clutch disk (10) rotationally connected with the drive, a main piston (30) arranged there between, the main piston (30) being pre-stressed by a main spring load (36) into pressure contact with the brake disk (20) and being movable by pressure control into pressure contact with the clutch disk (10), and having at least one auxiliary piston (40), which is movable relative to the main piston (30) and is loaded by an auxiliary spring force (42), **characterized in that** the at least one auxiliary piston (40) is arranged on the side of the clutch that faces away from the main piston (30) and, when no medium pressure is applied, is located by the auxiliary spring force (42) in a position in which the clutch is not pre-stressed, and can be moved into pressure contact with the clutch disk (10) by application of medium pressure.

2. The combination as defined in Claim 1, **characterized in that** the at least one auxiliary piston (40) can be separately driven independently of the main piston (30).

3. The combination as defined in Claim 1 or Claim 2, **characterized in that** the at least one auxiliary piston (40) comprises a separate medium line (45, 46, 47).

4. The combination as defined in Claim 3, **characterized in that** the medium line (45, 46, 47) of the auxiliary piston (40) is brought to a separate outlet.

5. The combination as defined in Claim 3, **characterized in that** the medium line (44, 45, 46, 46) of the auxiliary piston (40) opens into a medium line (32) of the main piston (30).

6. The combination as defined in any of the preceding claims, **characterized in that** the stroke of the at least one auxiliary piston (40) is adjustable.

7. The combination as defined in Claim 6, **characterized by** any of the following combinations:
a) The stroke of the auxiliary piston (40) is so long that the auxiliary piston will not be in contact with the clutch disk (10) when the main piston (30) already clears the brake disk (20);
b) the stroke of the auxiliary piston (40) is so long that the auxiliary piston will just be in contact with the clutch disk (10) when the main piston (30) clears the brake disk (20);
c) the stroke of the auxiliary piston (40) is so long that the auxiliary piston will already be in contact with the clutch disk (10) when the main piston (30) clears the clutch disk (10).

8. The combination as defined in any of the preceding claims, **characterized in that** a plurality of auxiliary pistons (40) is arranged upstream of the clutch disk (10), offset by equal angles.

## Revendications

1. Combinaison d'embrayage / frein comprenant :
- au moins un disque de frein fixe et au moins un disque d'embrayage (10) relié à l'entraînement de façon rotative,
- un piston principal (30) disposé entre ceux-ci, le piston principal (30) étant précontraint par une sollicitation de ressort principal (36) dans une position d'appui sur le disque de frein (20) et pouvant être déplacé par pression dans une position d'appui sur le disque d'embrayage (10), et
- au moins un piston auxiliaire (40) mobile par rapport au piston principal (30), qui pour sa part est sollicité par une force de ressort auxiliaire (42),
**caractérisée en ce que**
l'au moins un piston auxiliaire (40) est du côté de l'embrayage opposé au piston principal (30), et sans pression de fluide il se trouve par la force de ressort auxiliaire (42) dans une position qui ne précontraint pas l'embrayage et peut être déplacé par la pression de fluide dans une position d'appui sur le disque d'embrayage (10).

2. Combinaison selon la revendication 1,
**caractérisée en ce que**
l'au moins un piston auxiliaire (40) peut être commandé indépendamment du piston principal (30).

3. Combinaison selon la revendication 1 ou 2,
**caractérisée en ce que**
le piston auxiliaire (40) présente une conduite de fluide séparée (45, 46, 47).

4. Combinaison selon la revendication 3,
**caractérisée en ce que**
la conduite de fluide (45, 46, 47) du piston auxiliaire (40) est raccordée à une sortie séparée.

5. Combinaison selon la revendication 3,
**caractérisée en ce que**
la conduite de fluide (44, 45, 46, 47) du piston auxiliaire (40) débouche dans une conduite de fluide (32) du piston principal (30).

6. Combinaison selon l'une quelconque des revendications précédentes,
**caractérisée en ce que**
la course d'au moins un piston auxiliaire (40) est réglable.

7. Combinaison selon la revendication 6,
**caractérisée par**
l'une des combinaisons suivantes :
a) la course du piston auxiliaire (40) est suffisamment grande pour qu'il ne s'applique pas encore sur le disque d'embrayage (10) pendant que le piston principal (30) s'éloigne déjà du disque de frein (20) ;
b) la course du piston auxiliaire (40) est suffisamment grande pour qu'il s'applique au disque d'embrayage (10) juste au moment où le piston principal (30) s'éloigne du disque de frein (20) ;
c) la course du piston auxiliaire (40) est suffisamment grande pour qu'il s'applique déjà sur le disque d'embrayage (10) au moment où le piston principal (30) s'éloigne du disque d'embrayage (10).

8. Combinaison selon l'une quelconque des revendications précédentes,
**caractérisée en ce que**
plusieurs pistons auxiliaires (40) sont en amont du disque d'embrayage (10), décalés du même angle.
